Europäisches Patentamt

(19) European Patent Office

Office européen des brevets

(11) Numéro de publication: **0117170**
**B1**

(12) **FASCICULE DE BREVET EUROPEEN**

(45) Date de publication du fascicule du brevet:
**19.11.87**

(21) Numéro de dépôt: **84400085.1**

(22) Date de dépôt: **16.01.84**

(51) Int. Cl.⁴: **D 05 B 69/20**

(54) **Procédé d'automatisation au moins partielle d'une opération de couture et machine partiellement automatisée pour sa mise en oeuvre.**

(30) Priorité: **17.01.83 FR 8300605**

(43) Date de publication de la demande:
**29.08.84 Bulletin 84/35**

(45) Mention de la délivrance du brevet:
**19.11.87 Bulletin 87/47**

(84) Etats contractants désignés:
**AT BE CH DE GB IT LI LU NL SE**

(56) Documents cités:
**EP - A - 0 068 713**
**FR - A - 2 208 409**
**FR - A - 2 231 048**
**FR - A - 2 475 588**
**US - A - 3 613 608**
**US - A - 3 799 084**

(73) Titulaire: **PROUVOST S.A., 149, rue d'Oran,
F-59061 Roubaix Nord (FR)**

(72) Inventeur: **Leclaire, Charly, 68 rue Hoche,
F-62119 Dourges (FR)**

(74) Mandataire: **Lepeudry-Gautherat, Thérèse et al,
ARMENGAUD JEUNE CABINET LEPEUDRY 6, rue du
Faubourg Saint Honoré, F-75008 Paris (FR)**

ACTORUM AG

## Description

La présente invention concerne un procédé pour rendre automatique au moins partiellement une opération de couture pour en faciliter l'exécution répétitive et la machine à coudre adaptée pour sa mise en œuvre.

Dans l'industrie de la confection, de la bonneterie de même que dans la fabrication de chaussures, d'articles de maroquinerie, de produits d'habillage en sellerie, dans le domaine des articles de puériculture voire dans l'ameublement et la décoration, le personnel reproduit en grandes séries des opérations rigoureusement identiques à l'aide de machines à coudre ou à piquer. C'est notamment le cas dans la confection de vêtements où les tâches sont réparties sur une pluralité de postes de travail à chacun desquels une ouvrière effectue la même opération (fond de jupe, surpiqure, assemblage, montage d'un col ou de manches . . .). Dans chacune de ces opérations il se présente une partie qui nécessite une attention particulière de l'opératrice telle que la fin de la couture, un changement d'orientation, l'exécution d'une pointe de col . . . et donc une fatique nerveuse plus importante.

La recherche d'un soulagement de cette fatigue a conduit à l'automatisation de ces opérations répétitives. Il existe plusieurs procédé connus, plus ou moins sophitisquées, pour assurer cette automatisation qui consistent essentiellement à procéder à un enregistrement initial de l'opération de couture puis à commander en fonction des données enregistrées une machine robot d'exécution. Ainsi, le document FR-A 2 475 588 est relatif à une machine à coudre mettant en œuvre un nombre important de capteurs. En utilisation, l'ensemble de ces capteurs est activé, et ce à la fois lors de l'enregistrement d'une opération de couture comme lors de sa reproduction. Cette machine est en conséquence très sophistiquée et donc coûteuse, et de mise en œuvre lourde.

Dans la plupart des cas les procédés connus mettent en œuvre un comptage de points de couture qui présente de nombreux inconvénients lorsque l'étoffe travaillée est extensible. Or toute étoffe présente une certaine extensibilité (hormis certaines toiles extrêmement raides) qui introduit des aléas de comportement, non maîtrisables de manière simple, lorsqu'elle est soumise, par le dispositif d'entraînement de la machine et du fait de la conduite de la couture par l'opératrice, à des sollicitations mécaniques. Ainsi un comptage de points ne permet pas d'assurer de manière certaine la régularité d'une longueur de couture. Pour certaines étoffes, on peut en outre constater la formation de plis qui rendent la pièce réalisée inacceptable.

Pour tenter de remédier à ces inconvénients on a cherché à éliminer les causes mécaniques de la distorsion de l'étoffe, en procédant d'une part à des réglages longs et minutieux des dispositifs d'entraînement qui, du fait de leur nature mécanique, ont des caractéristiques qui varient dans le temps et en diminuant, d'autre part, l'influence de l'opératrice. Ces tentatives ont conduit à la conception de machines très spécialisées dont le domaine d'utilisation très pointu ne convient qu'à des fabrications uniformes et de très grande série. La rigidité d'une telle automatisation n'est pas du tout adaptée à la plupart des ateliers de confection. En outre la manipulation de ces machines est réalisée par des opératrices soit «presse-bouton» soit en revanche formées dans la téchnique d'informatique appliquée pour pouvoir «converser» avec la machine-robot. Il s'ensuit une déqualification de l'ouvrière ou la nécessité de lui faire subir une formation qui en tout état de cause ne coïncide que rarement avec ses désirs et surtout une utilisation optimale de sa qualification.

Compte tenu de ces considérations, la demanderesse a cherché une automatisation beaucoup plus flexible d'une machine à coudre permettant son utilisation dans de nombreux cas différents et la prise en charge d'étoffes variées sans nécessité de mettre en œuvre des réglages longs et coûteux. Elle a cherché également à conserver à l'opératrice le pouvoir d'exercer l'essentiel de sa qualification professionnelle, de son tournemain, tout en la soulageant de la plupart des tâches les plus fastidieuses et génératrices de tension nerveuse.

A la différence du procédé selon le document FR-A 2 475 588, la demanderesse propose un procédé utilisant un nombre très réduit de capteurs.

L'invention concerne à cet effet, un procédé d'automatisation au moins partielle d'une opération de couture effectuée à l'aide d'une machine à coudre comportant une commande de sa vitesse au moyen d'un organe fonctionnant par paliers et équipée d'un capteur du temps, d'un capteur de la position de l'organe de commande de la vitesse de la couture et d'un capteur coopérant avec une étoffe, selon lequel on procède d'abord à une phase d'enregistrement de l'opération de couture à réaliser de manière automatique pour ensuite reproduire de manière répétitive ladite couture, caractérisé en ce que ledit capteur coopérant avec l'étoffe est un capteur de longueur de couture, utilisé pour détecter la longueur de l'étoffe défilant sous l'aiguille, et en se que la phase d'enregistrement comporte, après activation générale du capteur du temps, du capteur de la position de l'organe de commande de la vitesse de couture et du capteur de longueur de couture, la mise en mémoire de la valeur instantanée de chacun de ces trois paramètres à chaque changement, commandé par l'opérateur, de position de l'organe de commande de vitesse de la machine tandis que la phase de reproduction consiste à détecter de manière continue le temps et la distance de couture à partir d'une activation générale des capteurs et, pour commander la position de l'organe de commande de la vitesse, à comparer le temps écoulé à celui mémorisé pas à pas si la position constatée de l'organe de commande de la vitesse, par une lecture de sa valeur mémorisée, est une position à vitesse nulle, et à comparer la distance de couture à celle mémorisée si la position constatée de l'organe de commande de la vitesse est une position à vitesse non nulle.

Avantageusement, l'activation des trois capteurs susdits est commandée en même temps que l'abaissement du pied de biche de la machine.

Avantageusement, en phase d'enregistrement on procède à la détection et à la mémorisation de la mise en œuvre d'organes auxiliaires de la machine réalisée par l'opérateur au moyen de capteurs et à la mise en mémoire au moins de la valeur du temps au moment de cette détection tandis qu'en phase de reproduction on commande la mise en œuvre de ces organes auxiliaires par comparaison du temps détécté en continu avec la valeur mémorisée susdite.

Le début et la fin de chacune des phases d'enregistrement et de reproduction sont de préférence commandées manuellement.

En complément, la vitesse de déroulement de la phase de reproduction peut être réglable par modification des valeurs mémorisées des paliers de vitesse et/ou par modification de la détection du temps de reproduction.

L'invention concerne aussi une machine à coudre partiellement automatique comprenant notamment un mécanisme moteur d'entraînement, dans une relation déterminée, de l'aiguille et du système de griffes, un dispositif de commande par paliers de la vitesse de fonctionnement dudit mécanisme, un pied de biche et son organe de commande, un capteur coopérant avec l'étoffe et situé près de l'aiguille, un capteur de la position de l'organe de commande de vitesse susdit, une horloge, pour mettre en œuvre le procédé selon l'une quelconque des revendications précédentes, caractérisée en ce que ledit capteur coopérant avec l'étoffe est agencé pour émettre un signal significatif de la longueur d'étoffe défilant sous l'aiguille et en ce que la machine comprend un organe d'actionnement automatique du dispositif de commande de vitesse susdit, un organe d'actionnement automatique de l'organe de commande du pied de biche, un dispositif de traitement des signaux émis par chacun des capteurs et horloge susdits pour enregistrer leur valeur instantanée à chaque changement de position de l'organe de commande de vitesse pendant la phase d'enregistrement, pour établir une comparaison entre ces signaux enregistrés et les signaux émis pendant la phase de reproduction et pour commander, en fonction des résultats de la comparaison, l'organe susdit d'actionnement automatique du dispositif de commande de vitesse, ledit dispositif de traitement comportant un sélecteur de la phase d'enregistrement et de la phase de reproduction, et l'activation des capteurs susdits étant associée à la commande du mouvement du pied de biche.

Avantageusement, le dispositif de traitement susdit comporte une entrée pour le signal d'un capteur du changement d'état d'au moins un organe auxiliaire pour l'enregistrer concomitamment avec au moins le temps et une sortie de commande d'un organe d'actionnement automatique dudit organe auxiliaire en phase de reproduction au moment où le temps lu est égal au temps enregistré.

Avantageusement, le dispositif de traitement comporte un moyen de réglage de la vitesse de reproduction agissant sur la valeur d'au moins certains des niveaux de paliers de vitesse enregistrés et sur la lecture du temps mesuré lors de la reproduction.

De préférence ledit sélecteur est manuel.

L'invention sera mieux comprise au cours de la description donnée ci-après à titre d'exemple purement indicatif qui permettra d'en dégager les avantages et les caractéristiques secondaires.

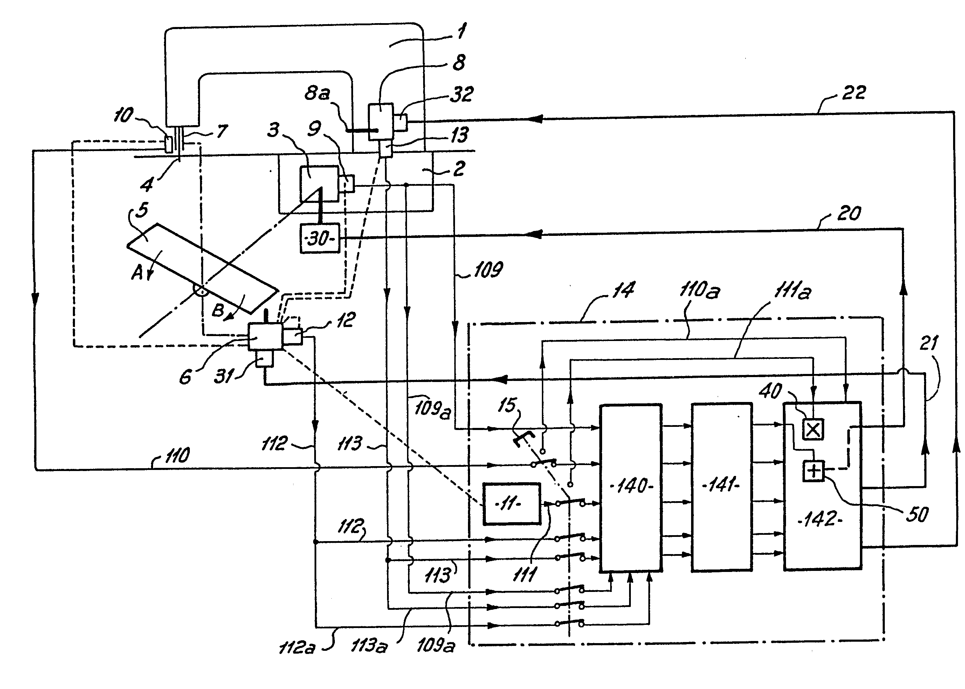

Il sera fait référence au dessin annexé qui est un chéma simplifié explicitant les diverses phases du procédé selon l'invention et les moyens généraux qui permettent de le mettre en œuvre.

En se reportant à ce dessin, on voit une machine à coudre 1 comportant un mécanisme moteur d'entraînement 2 pourvu d'un variateur de vitesse par paliers 3. La commande du mouvement de l'aiguille 4 et des griffes d'entraînement de l'étoffe (non représentées) s'effectue par l'opérateur au moyen d'un palonnier 5 qui agit sur le variateur de vitesse 3. Généralement ce variateur comporte huit paliers de vitesse, le premier correspondant à une vitesse nulle lorsque le palonnier est dans sa position de repos. L'augmentation de vitesse s'obtient en actionnant le palonnier 5 selon la flèche A. Par talonnade (selon la flèche B) on actionne un dispositif 6 de commande des mouvements du pied de biche 7 ce, de manière connue. On a représenté en 8 un organe d'inversion du sens de marche de la machine, avec en 8a sa commande manuelle.

Un premier capteur 9 est associé au variateur de vitesse 3 et émet en sortie un signal signicatif de la position du variateur, c'est-à-dire de chacun des niveaux de vitesse auxquels la machine est commandée. Un second capteur 10 disposé au voisinage immédiat de l'aiguille 4 émet en sortie un signal signifigatif de la longueur de l'étoffe défilant sous l'aiguille. Ce capteur peut être constitué par une roue roulant sans glisser sur l'étoffe ou par tout autre dispositif adapté. Un troisième capteur il est en fait constitué par une horloge qui émet un signal signicatif du temps et qui constitue la base temps du dispositif.

Outre ces trois capteurs principaux, on a associé à l'organe 6 de commande du pied de biche 7 un capteur 12 émettant un signal représentatif de l'état relevé ou abaissé de ce pied de biche. On notera également la présence d'un capteur 13 associé à la commande 8 d'inversion du mouvement de la machine. Ces deux derniers capteurs seront dits capteurs de fonctions auxiliaires de la machine et illustrent de manière non militative d'autres capteurs associés à d'autres appareils situés au voisinage de la machine et capables d'assurer des fonctions extérieures à la couture proprement dite telle que l'évacuation de la pièce achevée ou son pliage ou son transfert ...

Chacun de ces capteurs principaux ou auxiliaires sont reliés à l'entrée d'un dispositif de traitement 14 des signaux qu'ils émettent. On notera que leur activation générale peut être assurée par un contacteur marche-arrêt du dispositif ou bien par la talonnade du palonnier 5 et excitation du dispositif 6 (les lignes en traits discontinus de dessin symbolise cette activation).

Les lignes 109 à 113 symbolisent la connection des capteurs 9 à 13 au dispositif de traitement 14. Ce dispositif comporte schématiquement un lecteur 140 des signaux des capteurs lui parvenant par les lignes susdites, une mémoire 141 capable de conserver certaines valeurs des signaux susdits et un comparateur 142 effectuant une comparaison, décrite plus en détail ci-après, entre les valeurs mémorisées et des signaux d'entrée issus desdits capteurs ou de certains d'entre eux fonctionnant comme dispositifs de surveillance lors de la phase de reproduction, ledit comparateur 142 émettant en sortie des signaux de commande automatique en direction des organes de la machine tels que le variateur de vitesse 3 ou les appareils auxiliaires.

Le dispositif de traitement 14 comporte enfin un sélecteur 15 pour le placer soit en phase d'enregistrement soit en phase de reproduction.

Le procédé selon l'invention se déroule en deux phases: une première d'enregistrement et une seconde de reproduction, cette dernière pouvant être répétée à l'infini.

Pour enregistrer une opération de couture devant être répétée, l'opératrice place la pièce sous le pied de biche 7 de la machine en position relevée. Au moyen du sélecteur 15 elle place l'appareil ou dispositif de traitement 14 en position d'enregistrement. Cette opération consiste notamment à connecter les capteurs 9 à 13 à l'entrée du dispositif de lecteure 140. L'opératrice commande ensuite, par talonnade du palonnier 5 l'abaissement du pied de biche 7 en même temps que l'activation des capteurs 9 à 13. A cet instant le dispositif 140 lit les informations en provenance des capteurs (position de vitesse nulle pour le capteur 9, distance nulle pour le capteur 10, comptage du temps pour le capteur 11 ...). Puis l'opératrice enfonce le palonnier en direction de la flèche A, ce qui provoque un changement d'état du variateur de vitesse. Ce changement d'état intercepté par le capteur 9 est lu par le lecteur 140 et par la ligne 109a, dérivée de la ligne 109, provoque le déclenchement du lecteur 140 en direction de la mémoire 141. A cet instant donc, la mémoire 141 enregistre l'information en provenance du capteur 9 (premier niveau du variateur) du capteur 10 (distance parcourue 0) et du capteur 11 (temps $T_1$). Les mêmes enregistrements se produisent à chaque changement d'état du variateur soit dans le sens d'une augmentation de vitesse soit dans le sens d'une diminution de cette dernière. On a ainsi enregistré une image de la progression de la couture par enregistrement simultané des trois paramètres: niveau de vitesse, distance parcourue et temps écoulé, à chaque changement d'allure.

Dans une première hypothèse, en fin de couture, l'opératrice talonne le palonnier ce qui provoque la remontée du pied de biche 7, sans désactiver les capteurs. Cette talonnade détectée par le capteur 12 est d'une part lue par le dispositif 140 et d'autre part, par la ligne dérivée 112a, interpretée comme un signal de déclenchement de mémorisation des trois facteurs temps, vitesse (égale à 0) et distance parcourue (égale à la distance précédemment enregistrée lorsque le variateur est passé à son niveau de vitesse nulle) et également au changement de position du pied de biche lu par la ligne 112. L'opératrice peut alors manipuler sa pièce pour, par exemple, changer l'orientation de la couture. La reprise des opérations de couture commence alors par l'abaissement du pied de biche 7 qui provoque un nouvel enregistrement des paramètres temps, vitesse et distance et du nouveau changement d'état du pied de biche (commandé par une nouvelle talonnade ou tout autre dispositif). La poursuite de l'opératrion est enregistrée comme précédemment décrit.

Dans une deuxième hypothèse, l'opératrice actionne en fin de couture le dispositif inverseur. L'effet de cet actionnement est, sur le dispositif 14 de traitement, le même que celui du changement d'état du pied de biche (déclenchement de la mémorisation des paramètres temps, distance, vitesse et enregistrement de la position de l'inverseur).

La couture étant terminée, l'opératrice actionne la remontée du pied de biche (avec en conséquence mémorisation) et le coupe fil (non représenté mais ayant les mêmes effets que l'actionnement du pied de biche ou de l'inverseur c'est-à-dire de toutes les fonctions dites auxiliaires, sur le dispositif 14). Elle actionne ensuite le sélecteur 15 pour placer le dispositif 14 soit dans une position neutre soit dans une position de reproduction. Il s'est produit, par actionnement du coupe fil, par exemple, une désactivation des capteurs 9 à 13.

Dans une troisième hypothèse, en fin de première couture, l'opératrice doit effectuer une opération délicate telle par exemple que la surpiqure d'une pointe de col de chemise. Ayant relevé la palonnier 5, elle actionne le sélecteur 15 qui place le dispositif 14 dans une position neutre, avec mémorisation d'un arrêt de l'enregistrement. Le pied de biche n'ayant pas été remonté, elle poursuit sa couture en réalisant l'opération délicate en cause sans que celle-ci soit enregistrée. Une nouvelle action sur le sélecteur, remet le dispositif 14 dans sa position d'enregistrement de la poursuite de l'opération de couture qui s'effectue comme précédemment décrit.

On peut incorporer à cette première phase du procédé selon l'invention, l'enregistrement des trois paramètres susdits au moment de chaque changement de position d'un organe auxiliaire auquel est associé un capteur auxiliaire particulier.

En phase de reproduction, l'opératrice place le sélecteur 15 en position de reproduction ce qui a notamment pour effet de déconnecter les capteurs 9 à 13 de l'entrée du lecteur 140 et de connecter le capteur 10 par une ligne 110a et le capteur 11 par une ligne 111a à l'entrée du comparateur 142. Ayant ensuite placé la pièce à coudre sous le pied de biche 7, l'opératrice talonne le palonnier 5 pour d'une part abaisser le pied de biche et d'autre part activer les capteurs. Le comparateur 142 lit la variation des paramètres temps et distance qu'il reçoit en entrée. Initialement seul le temps varie et le comparateur, ayant constaté que le niveau de vitesse mémorisé est nul, effectue une comparaison de ce temps avec la valeur $T_1$ extraite de la mémoire 141. Au moment de l'égalité, le comparateur lit la deuxième valeur mémorisée du niveau de vitesse et transmet cette valeur par sa sortie 20 à un dispositif 30 de commande automatique du variateur 3. Le comparateur 142 a pris alors en compte le fait que la vitesse de la machine est non nulle et effectue la comparaison suivante entre la seconde valeur de distance mémorisée et la distance effectivement lue par le capteur 10 et qui lui est transmise par la ligne 110a. Au moment de l'égalité de ces deux valeurs, le comparateur 142 émet en direction du dispositif 30 un signal correspondant à la troisième valeur de vitesse enregistrée. On reproduit ainsi l'opération enregistrée. Au moment où la dernière valeur de vitesse émise en sortie du comparateur est nulle, le comparateur reprend la lecture du temps reçue de l'horloge 10 et le compare à la valeur mémorisée suivante. A cet instant, il reçoit de la mémoire la valeur du paramètre de commande enregistré à savoir, dans la première hypothèse d'enregistrement, le relèvement du pied de biche qu'il transmet par la ligne 21 au dispositif de commande automatique correspondant 31, dans la seconde hypothèse d'enregistrement l'actionnement du dispositif inverseur qu'il transmet par la ligne de sortie 22 au dispositif de commande automatique correspondant 32 et dans la troisième hypothèse l'arrêt de la reproduction avec, le cas échéant, une remise automatique du sélecteur 15 en position neutre.

Dans les première et seconde hypothèses d'enregistrement, la poursuite de la reproduction s'effectue comme précedemment décrit avec comparaison du temps écoulé à celui mémorisé pas à pas si la position constatée du variateur (par lecture de sa valeur mémorisée) est une position à vitesse nulle ou comparaison de la distance de défilement de l'étoffe si cette valeur correspond à une vitesse non nulle.

Par le choix de l'un des paramètres de la comparaison (temps ou distance) effectuée lors de la reproduction, l'invention permet d'obtenir une reproductibilité de la couture enregistrée avec une précision très importante en éliminant la plupart des facteurs mécaniques ou humains influant sur cette reproductibilité.

Dans la troisième hypothèse d'enregistrement, l'opératrice procède à la couture de la partie délicate de son ouvrage en commande manuelle puis celle-ci terminée, replace le sélecteur 15 sur sa position reproduction et poursuit en automatique son opération.

L'invention permet en outre de faire varier la vitesse globale de l'opération de reproduction au moyen de variateurs réglables manuellement ou préprogrammés. Ainsi en 40 on a schématisé un multiplicateur de temps introduit dans le comparateur 142. Si, en effet, le temps est lu par comptage d'impulsions, en doublant de manière connue le nombre des impulsions délivrées à l'entrée du comparateur 142 par l'horloge 11, on divise par deux le temps pendant lequel le nombre d'impulsions lues atteint celui mémorisé.

De même, en 50 on a schématisé un dispositif logique qui permet de modifier la valeur du signal extraite de la mémoire 141 et dirigée vers le dispositif 30 en lui affectant un ou deux paliers de vitesse en plus (ou en moins) de celui effectivement enregistré (pour les paliers de vitesse non nulle). On augmente ainsi la vitesse de reproduction des coutures (ou on peut la diminuer) par rapport à celle effectivement enregistrée.

On voit que le procédé et la machine selon l'invention, outre la grande précision qu'ils permettent d'atteindre dans la reproductibilité d'une opération de couture, offrent une très grande souplesse d'utilisation et donc des possibilités d'emploi très étendues. En outre, par sa conception même, l'invention permet d'automatiser de nombreuses machines existant actuellement sur le marché. Elle est enfin un ensemble permettant l'ajout ultérieur d'un grand nombre de fonctions auxiliaires existant à l'entour de l'opération de couture.

Elle trouve une application intéressante dans le domaine de l'industrie de l'habillement.

**Revendications**

1. Procédé d'automatisation au moins partielle d'une opération de couture effectuée à l'aide d'une machine (1) à coudre comportant une commande de sa vitesse au moyen d'un organe (3) fonctionnant par parliers et équipée d'un capteur (11) du temps, d'un capteur (9) de la position de l'organe de commande de la vitesse de la couture et d'un capteur (10) coopérant avec une étoffe, selon lequel on procède d'abord à une phase d'enregistrement de l'opération de couture à réaliser de manière automatique pour ensuite reproduire de manière répétitive ladite couture, caractérisé en ce que ledit capteur coopérant avec l'étoffe est un capteur de longueur de couture, utilisé pour détecter la longueur de l'étoffe défilant sous l'aiguille, et en ce que la phase d'enregistrement comporte, après activation générale du capteur (11) du temps, du capteur (9) de la position de l'organe de commande de la vitesse de couture et du capteur (10) de longueur du couture, la mise en mémoire de la valeur instantanée du chacun de ces trois paramètres à chaque changement, commandé par l'opérateur, de position de l'organe (3) de commande de vitesse de la machine tandis que la phase de reproduction consiste à détecter de manière continue le temps (11) et la distance (10) de couture à partir d'une activation générale des capteurs (9, 10, 11) et, pour commander la position de l'organe (3) de commande de la vitesse, à comparer le temps écoulé à celui mémorisé pas à pas si la position constatée de l'organe de commande de la vitesse, par une lecture de sa valeur mémorisée, est une position à vitesse nulle, et à comparer la distance de couture à celle mémorisée si la position constatée de l'organe de commande de la vitesse est une position à vitesse non nulle.

2. Procédé d'automatisation selon la revendication 1, caractérisée en ce que l'activation des trois capteurs (9, 10, 11) susdits est commandée en même temps que l'abaissement du pied de biche (7) de la machine (1).

3. Procédé selon la revendication 1 ou la revendication 2, caractérisé en ce qu'en phase d'enregistrement on procède à la détection et à la mémorisation de la mise en œuvre d'organes auxiliaires (6, 8) de la machine réalisée par l'opérateur au moyen de capteurs (12, 13) et à la mise en mémoire au moins de la valeur du temps au moment de cette détection tandis qu'en phase de reproduction on commande la mise en œuvre de ces organes auxiliaires (6, 8) par comparaison du temps détecté en continu avec la valeur mémorisée susdite.

4. Procédé selon l'une quelconque des revendications précédentes, caractérisé en ce que le début et la fin de chacune des phases d'enregistrement et de reproduction sont commandées manuellement.

5. Procédé selon l'une quelconque des revendications précédentes, caractérisé en ce que la vitesse de déroulement de la phase de reproduction est réglable par modification des valeurs mémorisées des paliers de vitesse et/ou par modification de la détection de temps de reproduction.

6. Machine (1) à coudre partiellement automatique comprenant notamment:

– un mécanisme moteur (2) d'entraînement, dans une relation déterminée, de l'aiguille et du système de griffes,
– un dispositif (3) de commande par paliers de la vitesse de fonctionnement dudit mécanisme (2),
– un pied de biche (7) et son organe de commande (6),
– un capteur (10) coopérant avec l'étoffe et situé près de l'aiguille,
– un capteur (9) de la position de l'organe de commande de vitesse susdit,
– une horloge,
pour mettre en œuvre le procédé selon l'une quelconque des revendications précédentes, caractérisée en ce que ledit capteur coopérant avec l'étoffe est agencé pour émettre un signal significatif de la longueur d'étoffe défilant sous l'aiguille et en ce que la machine comprend:

– un organe (30) d'actionnement automatique du dispositif (3) de commande de vitesse susdit,

– un organe (31) d'actionnement automatique de l'organe de commande du pied de biche (7),
– un dispositif (14) de traitement des signaux émis par chacun des capteurs (9, 10) et horloge (11) susdits pour enregistrer leur valeur instantanée à chaque changement de position de l'organe de commande de vitesse pendant la phase d'enregistrement, pour établir une comparaison entre ces signaux enregistrés et les signaux émis pendant la phase de reproduction et pour commander, en fonction des résultats de la comparaison, l'organe susdit d'actionnement (30) automatique du dispositif (3) de commande de vitesse, ledit dispositif de traitement (14) comportant un sélecteur (15) de la phase d'enregistrement et de la phase de reproduction, et l'activation des capteurs susdits étant associée à la commande (6) du mouvement du pied de biche (7).

7. Machine selon la revendication 6, caractérisée en ce que le dispositif de traitement (14) susdit comporte une entrée pour le signal d'un capteur (12, 13) du changement d'état d'au moins un organe auxiliaire pour l'enregistrer concomitamment avec au moins le temps et une sortie de commande d'un organe d'actionnement automatique (31, 32) dudit organe auxiliaire en phase de reproduction au moment où le temps lu est égal au temps enregistré.

8. Machine selon la revendication 6 ou la revendication 7, caractérisée en ce que le dispositif de traitement (14) comporte un moyen de réglage (40, 50) de la vitesse de reproduction agissant sur la valeur d'au moins certains des niveaux de paliers de vitesse enregistrés et sur la lecture du temps mésuré lors de la reproduction.

9. Machine selon l'une quelconque des revendications 6 à 8, caractérisée en ce que ledit sélecteur (15) est manuel.

**Patentansprüche**

1. Verfahren zur zumindest teilweisen Automatisierung einer Nahtherstellung, die mittels einer Nähmaschine (1) erfolgt, die eine Geschwindigkeitssteuerung mittels eines stufenweise arbeitenden Elements (3) aufweist und mit einem Zeitgeber (11), einem Geber (9) für die Position des Nahtgeschwindigkeitssteuerelements und einem mit einem Stoff zusammenwirkenden Geber (10) ausgestattet ist, gemäss welchem man zuerst eine Aufzeichnungsphase der selbsttätig vorzunehmenden Nahtherstellung durchführt, um anschliessend in sich wiederholender Weise die Naht herzustellen, dadurch gekennzeichnet, dass der mit dem Stoff zusammenwirkende Geber ein Geber für die Nahtlänge ist, der dazu dient, die Länge des unter der Nadel hindurchtretenden Stoffes zu erfassen, und dass die Aufzeichnungsphase nach allgemeiner Aktivierung des Zeitgebers (11), des Gebers (9) für die Position des Nahtgeschwindigkeitssteuerelements und des Nahtlängengebers (10) die Speicherung des Augenblickswerts eines jeden dieser drei Parameter bei jeder vom Benutzer gesteuerten Änderung der Position des Geschwindigkeitssteuerelements (3) der Maschine umfasst, während die Wiedergabephase darin besteht, in kontinuierlicher Weise die Zeit (11) und die Strecke (10) der Naht seit einer allgemeinen Aktivierung der Geber (9, 10, 11) zu erfassen, und zur Steuerung der Position des Geschwindigkeitssteuerelements (3) die abgelaufene Zeit schrittweise mit der gespeicherten Zeit zu vergleichen, wenn die ermittelte Position des Geschwindigkeitssteuerlements, durch Lesen seines gespeicherten Werts, eine Position mit der Geschwindigkeit Null ist, und die Nahtstrecke mit der gespeicherten Nahtstrecke zu vergleichen, wenn die erfasste Position des Geschwindigkeitssteuerelements eine Position mit einer Geschwindigkeit ungleich Null ist.

2. Verfahren zur Automatisierung nach Anspruch 1, dadurch gekennzeichnet, dass die Aktivierung der drei genannten Geber (9, 10, 11) zur gleichen Zeit gesteuert wird wie das Absenken des Nadelhebers (7) der Maschine (1).

3. Verfahren nach Anspruch 1 oder Anspruch 2, dadurch gekennzeichnet, dass man in der Aufzeichnungsphase die Erfassung und die Speicherung der Betätigung der Hilfsorgane (6, 8) der Maschine vornimmt, die vom Benutzer mittels der Geber (12, 13) erfolgt, sowie zumindest die Speicherung des Zeitwerts vom Zeitpunkt dieser Erfassung, während man in der Wiedergabephase die Betätigung dieser Hilfsorgane (6, 8) durch Vergleich der kontinuierlich erfassten Zeit mit dem genannten gespeicherten Wert steuert.

4. Verfahren nach irgendeinem der vorausgehenden Ansprüche, dadurch gekennzeichnet, dass Anfang und Ende der Aufzeichnungs- und Wiedergabephase manuell gesteuert werden.

5. Verfahren nach irgendeinem der vorausgehenden Ansprüche, dadurch gekennzeichnet, dass die Geschwindigkeit des Ablaufs der Wiedergabephase durch eine Modifizierung der gespeicherten Werte der Geschwindigkeitsstufen und/oder durch Modifizierung der Erfassung der Wiedergabezeit regulierbar ist.

6. Teilautomatisierte Nähmaschine (1), die insbesondere umfasst:

– eine Antriebsvorrichtung (2) zu einem in bestimmter Relation erfolgenden Antrieb der Nadel und des Greifersystems,
– eine Vorrichtung (3) zur stufenweisen Steuerung der Arbeitsgeschwindigkeit der Antriebsvorrichtung (2),
– einen Nadelheber (7) und sein Steuerelement (6),
– einen Geber (10), der mit dem Stoff zusammenwirkt und neben der Nadel angeordnet ist,
– einen Geber (9) für die Position des genannten Steuerelements,
– eine Uhr,
zur Durchführung des Verfahrens nach irgendeinem der vorausgehenden Ansprüche, dadurch gekennzeichnet, dass der mit dem Stoff zusammenwirkende Geber derart ausgebildet ist, dass er ein Signal bezüglich der Stofflänge abgibt, die unter der Nadel hintendurchtritt, und dass die Maschine umfasst:

– ein Element (30) zur selbsttätigen Betätigung der Vorrichtung (3) zur Geschwindigkeitsteuerung,
– ein Element (31) zur selbsttätigen Betätigung des Steuerelements für den Nadelheber (7),
– eine Vorrichtung (14) zur Verarbeitung der Signale, die von jedem der Geber (9, 10) und der Uhr (11) abgegeben werden, zwecks Aufzeichnung ihres Augenblickwerts bei jeder Änderung der Position des Geschwindigkeitssteuerelements während der Aufzeichnungsphase, um einen Vergleich zwischen den aufgezeichneten Signalen und während der Wiedergabephase abgegebenen Signalen vorzunehmen, und um als Funktion des Vergleichsergebnisses das Element (30) zur selbsttätigen Betätigung der Vorrichtung (3) zur Geschwindigkeitssteuer zu steuern, wobei die Vorrichtung (14) zur Signalverarbeitung einen Wähler (15) für die Aufzeichnungsphase und die Wiedergabephase aufweist, und die Aktivierung der genannten Geber der Steuerung (6) für die Bewegung des Nadelhebers (7) zugeordnet ist.

7. Maschine nach Anspruch 6, dadurch gekennzeichnet, dass die Vorrichtung (14) zur Signalverarbeitung einen Eingang für das Signal eines Gebers (12, 13) für eine Zustandsänderung mindestens eines Hilfselements aufweist, um diese gleichzeitig zumindest mit der Zeit aufzuzeichnen, und einen Steuerausgang für ein Element (31, 32) zur selbsttätigen Betätigung des Hilfselements in der Wiedergabephase zu einem Zeitpunkt, wo die abgelesene Zeit gleich der aufgezeichneten Zeit ist.

8. Maschine nach Anspruch 6 oder Anspruch 7, dadurch gekennzeichnet, dass die Vorrichtung (14) zur Signalverarbeitung eine Einstellvorrichtung (40, 50) für die Wiedergabegeschwindigkeit aufweist, die auf den Wert von zumindest gewissen Pegeln der aufgezeichneten Geschwindigkeitsstufen einwirkt, sowie auf die Ablesung der während der Wiedergabe gemessenen Zeiten.

9. Maschine nach irgendeinem der Ansprüche 6 bis 8, dadurch gekennzeichnet, dass der Wähler (15) handbetätigbar ist.

**Claims**

1. A method for at least partially automating a sewing operation carried out by means of a sewing machine (1) including a control for controlling its speed by means of an element (3) operating in steps and equipped with a time sensor (11), with a sensor (9) detecting the position of the element controlling the speed of the sewing and a sensor (10) cooperating with a piece of material, including first of all a phase for recording the sewing operation to be performed automatically so as then to reproduce said stitching in repetitive fashion, characterized in that said sensor cooperating with the material is a sewing length sensor used for detecting the length of the material passing under the needle, and in that the recording phase includes, after general activation of the time sensor (11), of the sensor (9) detecting the position of the element controlling the sewing speed and of the sewing length sensor (10), storing the instantaneous value of each of these three parameters at each change, controlled by the operator, of position of the machine speed control element (3) whereas the reproduction phase consists in continuously detecting the sewing time (11) and distance (10) from a general activation of the sensors (9, 10, 11) and, for controlling the position of the speed control member (3), in comparing the time elapsed with that stored step by step if the detected position of the speed control element, by reading its stored value, is a zero speed position, and in comparing the sewing distance with that stored if the detected position of the speed control element is a non zero speed position.

2. The automation method as claimed in claim 1, characterized in that activation of the three said sensors (9, 10, 11) is controlled at the same time as lowering of the presser foot (7) of the machine (1).

3. Method according to claim 1 or claim 2, characterized in that during the recording phase the detection and storage of the use by the operator of auxiliary elements (6, 8) of the machine are provided by means of sensors (12, 13) and at least the value of the time at the moment of this detection is stored whereas, in the reproduction phase, the use of these auxiliary elements (6, 8) is controlled by comparison of the continuously detected time with said stored value.

4. Method according to any one of the preceding claims, characterized in that the beginning and end of each of the recording and reproduction phases are controlled manually.

5. Method according to any one of the preceding claims, characterized in that the speed at which the reproduction phase takes place is adjustable by modifying the stored values of the speed steps and/or by modifying the detection of the reproduction time.

6. Partially automatic sewing machine (1) including particularly:

- a drive element (2) for driving, in a given relationship, the needle and the claw system,
- a device (3) for controlling the operating speed of said mechanism (2) by steps,
- a presser foot (7) and its control member (6),

- a sensor (10) cooperating with the material and situated near the needle,
- a sensor (9) detecting the position of said speed control element,
- a clock,

for putting into practice the method as claimed in any one of the preceding claims, characterized in that said sensor cooperating with the material is adapted to emit a signal significative of the length of material passing under the needle and in that the machine includes:
- an element (30) for automatically actuating said speed control device (3),
- an element (31) for automatically actuating the control member of the presser foot (7).
- a device (14) for processing the signals emitted by each of the sensors (9, 10) and said clock (11) for recording their instantaneous value at each change of position of the speed control element during the recording phase, for making a comparison between these recorded signals and the signals emitted during the reproduction phase and for controlling, as a function of the results of the comparison, said element (30) for automatically actuating the speed control device (3), said processing device (14) including a selector (15) for selecting the recording phase and the reproduction phase and activation of said sensors being associated with the control (6) of the movement of the presser foot (7).

7. Machine according to claim 6, characterized in that said processing device (14) includes an input for the signal (12, 13) of a change of state sensor from at least one auxiliary element for recording it concomitantly with at least the time and a control output of an element (31, 32) for automatically actuating said auxiliary element in the reproduction phase at the moment when the time read is equal to the recorded time.

8. Machine according to claim 6 or claim 7, characterized in that the processing device (14) includes a means (40, 50) for adjusting the reproduction speed acting on the value of at least some of the speed levels recorded and on the reading of the measured time during reproduction.

9. Machine according to any one of claims 6 to 8, characterized in that said selector (15) is manual.